# FASCICULE DE BREVET EUROPEEN

(11) **EP 2 663 705 B1**
(45) Date de publication et mention de la délivrance du brevet: **19.07.2017**
(21) Numéro de dépôt: 11735645.1
(22) Date de dépôt: 22.07.2011
(51) Int. Cl.: E05B 77/06, E05B 77/42, E05B 85/18, E05B 85/10, E05B 5/00, E05B 17/10, E05B 81/06, E05B 81/78, E05B 81/90

(54) **POIGNEE D'OUVRANT DE VEHICULE COMPRENANT UNE PARTIE DE PREHENSION**
HANDGRIFF EINES ÖFFNUNGSELEMENTS EINES FAHRZEUGS MIT EINEM GRIFFTEIL
HANDLE OF AN OPENING ELEMENT OF A VEHICLE, COMPRISING A GRIP PART

(30) Priorité: 30.07.2010 IT MI20101450
(43) Date de publication de la demande: 20.11.2013
(73) Titulaire: U-Shin Italia S.p.A., 10044 Pianezza (IT)
(72) Inventeur: LESUEUR, Guillaume, F-94046 Creteil Cedex (FR); ROCCI, Antonio, I-10036 Settimo Torinese (IT)
(74) Mandataire: Gaillarde, Frédéric F. Ch.
(86) Numéro de dépôt international: PCT/EP2011/062657
(87) Numéro de publication internationale: WO 2012/013599

(56) Documents cités:
- EP-A1- 0 893 561
- WO-A1-00/70633
- DE-A1- 10 134 993
- DE-A1-102006 027 474
- FR-A1- 2 886 664
- US-A- 5 560 659

## Description

L'invention concerne les poignées d'ouvrant de véhicule.

Les poignées d'ouvrant constituent un composant qui influence de façon substantielle le style du véhicule qui les porte. A cet égard, les constructeurs de véhicules cherchent fréquemment à disposer la poignée dans le plan de la portière afin qu'elle ait une position affleurante (disposition *flush*), et plus généralement à rendre la poignée aussi peu visible que possible. De telles poignées affleurantes ont, en outre, l'avantage de diminuer le bruit aérodynamique dû au passage de l'air lors du roulement du véhicule.

On connaît ainsi des poignées qui présentent extérieurement uniquement une paroi plane s'étendant dans le plan de l'ouvrant. Il s'agit d'une paroi d'une pièce que l'utilisateur doit d'abord faire basculer pour la placer en saillie de l'ouvrant afin de pouvoir la manoeuvrer pour ouvrir l'ouvrant. Une telle poignée s'avère relativement peu ergonomique.

On connaît une autre poignée qui ménage en permanence une ouverture pour l'introduction de la main de l'utilisateur afin que celui-ci puisse facilement manoeuvrer la poignée. Une telle poignée est plus ergonomique que la précédente mais beaucoup plus visible aussi.

Les documents EP 0 893 561 A1, DE 10 2006 027474 A1, US 5 560 659 A, DE 101 34 993 A1 et FR 2 886 664 A1 divulguent des poignées d'ouvrant de véhicule, qui présentent extérieurement uniquement une paroi plane s'étendant dans le plan de l'ouvrant. Un but de l'invention est de réaliser une poignée qui soit à la fois ergonomique et relativement peu visible.

A cet effet, on prévoit selon l'invention une poignée d'ouvrant de véhicule, ledit ouvrant comprenant un bâti et une paroi principale externe présentant des faces externes planes et contiguës l'une à l'autre et à la poignée, ladite poignée comprenant :
- une partie de préhension mobile en rotation entre une position de repos masquant une cavité présente dans l'ouvrant et s'étendant à une zone de jonction des faces et une position d'ouverture dans laquelle la partie de préhension dégage en grande partie la cavité, s'étendant à distance des faces de l'ouvrant , au-dessus et en regard de ce dernier
   et un volet monté mobile en translation par rapport au bâti entre :
   - une position dans laquelle ledit volet occupe une ouverture s'étendant dans le prolongement de la partie de préhension et ne permettant pas une manoeuvre de cette dernière; et
   - une position dans laquelle ledit volet dégage l'ouverture.

Ainsi, lorsque le volet est dans sa position d'occupation de l'ouverture, il rend la poignée relativement discrète. On peut notamment prévoir que, dans cette position, le volet s'étend dans un plan local externe de l'ouvrant de sorte que sa position est affleurante. Lorsque le volet dégage l'ouverture, cette dernière facilite la manoeuvre de la poignée pour que l'utilisateur puisse manipuler l'ouvrant. L'utilisateur dispose donc d'une ouverture pour l'accès à la partie de préhension et cette ouverture est occupée par le volet le reste du temps. On obtient par conséquent une poignée à la fois ergonomique et peu visible sur l'ouvrant.

De préférence, le volet est monté coulissant par rapport à un bâti de la poignée.

Avantageusement, la poignée comprend un moteur apte à faire passer le volet de la position d'occupation à la position de dégagement.

L'utilisateur est donc dispensé de déplacer le volet pour manoeuvrer la partie de préhension.

De préférence, la poignée comprend un ralentisseur d'un mouvement du volet.

Ce ralentisseur permet d'uniformiser la vitesse de déplacement du volet, sous l'effet du moteur notamment. On obtient donc un mouvement plus élégant qui est perçu par l'utilisateur comme un signe de qualité et de haut de gamme.

De préférence, la poignée comprend des moyens agencés pour commander le dégagement de l'ouverture par le volet sous l'effet d'une réception d'un signal par une liaison sans fil.

Il peut, par exemple, s'agir d'un signal transmis par un organe du véhicule ou par un organe porté par l'utilisateur qui déclenche automatiquement le dégagement du volet lorsque l'utilisateur arrive à proximité du véhicule. La manoeuvre de la poignée est donc particulièrement facile.

Avantageusement, la poignée est agencée pour permettre de déplacer le volet manuellement pour le faire passer de la position d'occupation à la position de dégagement.

Il s'agit de préférence d'un mode dégradé prévu dans l'hypothèse d'une avarie qui empêche le dégagement du volet par le moteur. L'utilisateur conserve donc la possibilité dans un pareil cas de déplacer lui-même le volet pour manoeuvrer la partie de préhension.

De préférence, la poignée comprend des moyens d'immobilisation du volet dans la position de dégagement, distincts de la partie de préhension.

Ainsi, ces moyens assurent la retenue du volet pour faciliter la manoeuvre de la partie de préhension par l'utilisateur.

De préférence, la partie de préhension étant montée mobile entre une position de repos et une position d'ouverture, la poignée est agencée de sorte que le volet ne peut pas quitter la position de dégagement lorsque la partie de préhension est en position d'ouverture.

Il s'agit d'une mesure de sécurité qui empêche le retour du volet pendant la manoeuvre de la partie de préhension.

Dans un mode de réalisation, la partie de préhension est agencée de sorte que, en position d'ouverture, elle empêche le volet de quitter sa position de dégagement.

De préférence, le volet est agencé de sorte que, en position d'occupation, il empêche la poignée de quitter sa position de repos sous l'effet d'une accélération orientée vers l'extérieur de l'ouvrant.

Ainsi, si le véhicule subit un choc tendant à déplacer la partie de préhension jusqu'à sa position d'ouverture, le volet l'immobilise en position de repos. Cela interdit dans un tel cas l'ouverture intempestive de l'ouvrant et préserve donc la sécurité des passagers de l'habitacle.

De préférence, la poignée comprend une source de lumière pour éclairer l'ouverture.

La lumière ainsi produite facilite la manoeuvre de la partie de préhension, notamment dans la pénombre ou l'obscurité.

Avantageusement, la partie de préhension est montée mobile entre une position de repos dans laquelle elle masque un verrou de la poignée et une position d'ouverture dans laquelle elle découvre le verrou.

Ainsi, en position de repos, le verrou se trouve protégée des salissures et des chocs. Elle est également plus difficile à localiser pour un malfaiteur qui ne connait pas le modèle du véhicule. Il pourra s'agir d'un simple verrou de secours utilisée seulement lorsque le déverrouillage à distance du véhicule ne fonctionne pas.

On prévoit également selon l'invention un ouvrant qui comprend une poignée selon l'invention, la partie de préhension et le volet s'étendant au repos dans au moins un plan local d'une paroi principale externe de l'ouvrant.

Ainsi, la poignée est particulièrement peu visible sur l'ouvrant.

Avantageusement, la poignée est agencée de sorte que le volet passe de la position d'occupation à la position de dégagement en s'enfonçant dans un bol ménagé dans la face externe de la paroi.

La course du volet se trouve donc tout entière dans le volume occupé par l'ouvrant.

D'autres caractéristiques et avantages de l'invention apparaitront encore dans la description suivante d'un mode de réalisation donné à titre d'exemple non limitatif en référence aux dessins annexés sur lesquels :
- les figures 1 à 3 sont trois vues partielles en perspective d'un ouvrant selon l'invention montrant trois étapes de fonctionnement de la poignée depuis l'extérieur de l'ouvrant ;
- la figure 4 est une vue en perspective de la poignée telle que vue depuis l'intérieur de l'ouvrant ;
- les figures 5 et 6 sont des vues en coupe de la poignée suivant le plan V-VI de la figure 4 respectivement en position d'occupation et en position de dégagement du volet; et
- les figures 7 à 9 sont des vues analogues à la figure 4 illustrant trois circonstances différentes de fonctionnement de la poignée.

On a illustré sur les figures un mode de réalisation d'un ouvrant 2 de véhicule automobile comportant une poignée 4 selon un mode de réalisation de l'invention. Nous supposons ici que l'ouvrant 2 est une portière d'un siège du conducteur du véhicule. Mais il pourrait aussi s'agir d'une portière d'un passager avant, d'une portière d'un passager arrière ou encore d'un hayon arrière.

L'ouvrant 2 comprend une paroi principale externe 6 présentant notamment deux faces externes 8 et 10 sensiblement planes et contiguës l'une à l'autre et à la poignée 4. La face 10 est verticale tandis que la face 8 est légèrement inclinée par rapport à la direction verticale.

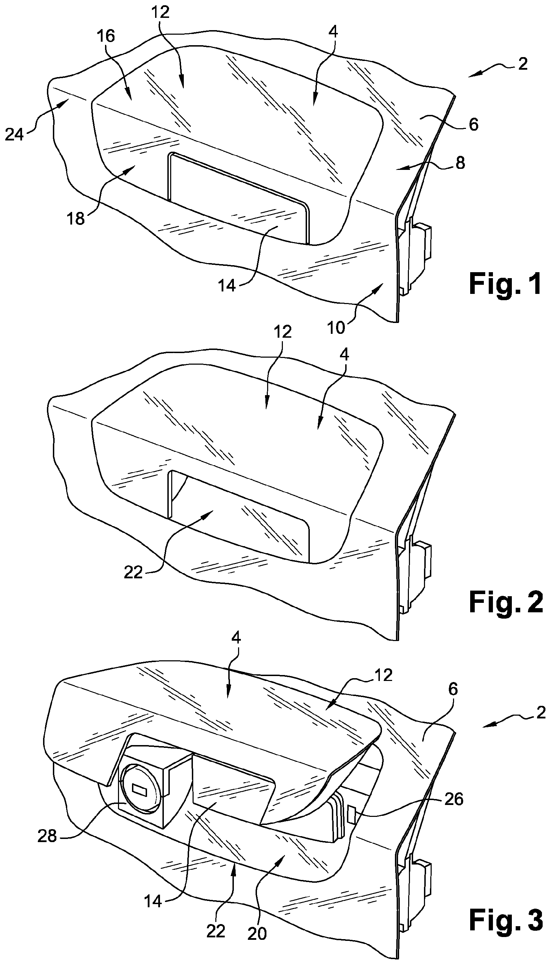

La poignée 4 comprend une partie de préhension 12 et un volet 14. La partie de préhension 12 comprend une paroi présentant deux faces externes 16 et 18. L'ouvrant présente une cavité 20 visible notamment sur la figure 3, en l'espèce sous la forme d'un bol et s'étendant à une zone de jonction des faces 8 et 10. Dans la position de repos de la poignée illustrée à la figure 1, la face 16 de la partie de préhension masque le bol en partie supérieure et s'étend dans le prolongement du plan de la face 8, en continuité avec cette dernière. De même, la face 18 masque le bol par l'avant et s'étend dans le prolongement de la face 10, dans le plan de cette dernière et en continuité avec elle. Il en est de même pour le volet 14.

Le volet présente une forme générale rectangulaire. Il occupe au repos une ouverture verticale rectangulaire 22 dont le côté supérieur et les deux côtés latéraux verticaux sont délimités par une découpe réalisée dans la partie de préhension 12 et dont le bord inférieur est formé par un tronçon d'un bord du bol.

Nous allons tout d'abord décrire le fonctionnement normal de la poignée tel qu'observé par l'utilisateur.

Sur la figure 1, la partie de préhension 12 et le volet 14 ne peuvent donc être distingués de la paroi 6 que grâce à leurs bords respectifs. Le bol 20 se trouve en effet tout entier fermé et masqué depuis l'extérieur par la partie de préhension et le volet. Dans la zone occupée par la poignée, l'ouvrant présente à la vue ses deux faces 8 et 10 qui sont en continuité avec celles de la poignée et se rejoignent pour former une arête 24 qui court également sur la partie de préhension 12.

On suppose que l'utilisateur est porteur d'un boitier électronique d'un type connu assurant son identification automatique par le véhicule au moyen d'un signal transmis sans fil, notamment lorsque l'utilisateur arrive à proximité du véhicule. Il s'agit par exemple d'une clé de contact du véhicule permettant également l'accès à ce dernier. On peut aussi prévoir que cette identification a lieu lorsque l'utilisateur actionne un bouton sur un boitier de télécommande.

La poignée 4 comprend des moyens 15 aptes à reconnaître un tel signal et à commander alors le déplacement du volet 14. Le volet est à cette fin monté mobile à translation par rapport à un bâti de l'ouvrant entre une position d'occupation de l'ouverture 22, illustrée à la figure 1, et une position dans laquelle il dégage cette ouverture comme illustré aux figures 2 et 3. Le volet s'étend alors au fond du bol 20.

Le recul du volet rend visible pour l'utilisateur l'ouverture 22. L'utilisateur voit donc qu'il peut introduire ses doigts dans cette ouverture pour manoeuvrer la partie de préhension 12. Cette dernière, qui est ici du type palette, est montée mobile à rotation entre une position de repos illustrée aux figures 1 et 2 et une position d'ouverture illustrée à la figure 3 dans laquelle elle dégage en grande partie le bol 20 et s'étend à distance des deux faces 8 et 10 de l'ouvrant, au-dessus et en regard de ce dernier.

La poignée comprend en outre, en l'espèce, une source de lumière 26 apte à éclairer le bol 20 depuis le fond ou le côté de ce dernier dès que le volet 14 quitte la position d'occupation. L'utilisateur voit donc encore plus clairement comment manoeuvrer la partie de préhension 12.

L'ouvrant comprend un mécanisme d'ouverture d'un type classique qui ne sera pas détaillé ici et qui est commandé par la partie de préhension 12. C'est donc l'utilisateur qui, manoeuvrant la partie de préhension en la déplaçant de la position de repos à la position d'ouverture, entraîne le déverrouillage de l'ouvrant et l'ouverture de ce dernier.

Le mécanisme comprend une serrure qui peut si besoin être commandée par un verrou de secours 28 dont l'extrémité est visible à l'extérieur de l'ouvrant lorsque la partie de préhension est dans la position d'ouverture. Cette extrémité est masquée par la partie de préhension en position de repos. Le verrou est contigu au bol 20 dont il forme une des parois latérales.

On prévoit que, en fonctionnement normal, la commande à distance effectuée par l'utilisateur ou la reconnaissance automatique de ce dernier comme indiqué plus haut a également pour effet de déverrouiller l'ouvrant de sorte que l'utilisateur n'a pas à introduire une clé dans le verrou 28. Il conserve toutefois la possibilité de le faire en mode dégradé ou si, dans un mode de réalisation, il n'est pas prévu que les actions précitées entraînent un déverrouillage automatique de l'ouvrant.

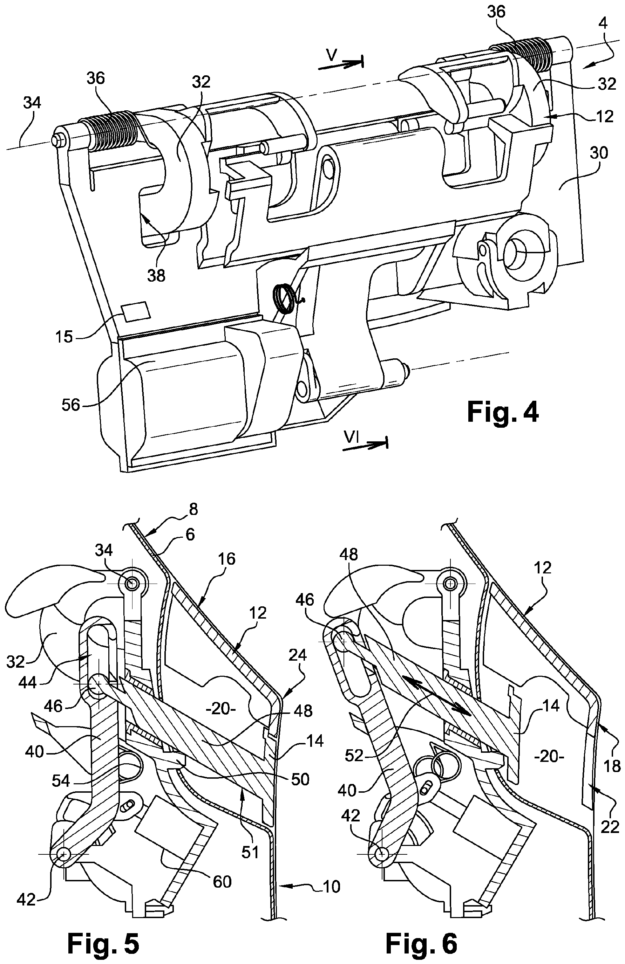

Nous allons maintenant détailler la constitution de la poignée en référence aux figures 4 à 6.

La poignée comprend un bâti 30 rigidement fixé au bâti de l'ouvrant 2. La partie de préhension 12 comprend deux bras 32 en cols de cygne au moyen desquels elle est articulée à une extrémité supérieure du bâti 30 autour d'un axe horizontal 34. Ce dernier est, en l'espèce, parallèle à la direction longitudinale du véhicule et à l'arête 24. Les bras 32 ont une forme en arc de cercle et traversent des ouvertures 38 ménagées dans le bâti 30.

La poignée comprend deux ressorts de rappel 36 tendant à ramener la partie de préhension dans la position de repos de la figure 2. Les ressorts 36 prennent pour cela appui d'une part sur le bâti et d'autre part sur les bras 32 respectifs.

La poignée 4 comprend une manivelle 40 présentant une extrémité, ici inférieure, articulée au bâti autour d'un axe 42 parallèle à l'axe 34. La manivelle 40 présente à son extrémité supérieure un logement 44 de forme allongée rectiligne dans lequel est mobile à coulissement une extrémité proximale d'un bras interne 48 du volet 14. La direction de coulissement 52 du volet s'étend dans un plan perpendiculaire à l'axe 42 et est ici inclinée par rapport aux directions verticale et horizontale. La manivelle a, en l'espèce, une forme coudée en vue dans un tel plan. Le bras 48 porte à son extrémité distale la paroi externe du volet.

Le bâti 30 comprend un guide 50 sur lequel prennent appui les faces du bras 48. La liaison de la manivelle 40 avec l'extrémité 46 et l'appui du bras 48 sur le guide 50 assurent un guidage à coulissement du volet 14 entre la position d'occupation illustrée aux figures 1 et 5 et la position de dégagement illustrée aux figures 2, 3 et 6.

Dans la première de ces positions, la manivelle occupe une position avancée et l'extrémité 46 s'étend dans le bas du logement 44. La rotation de la manivelle autour de l'axe 42 entraîne la montée de cette extrémité dans le logement et le coulissement du volet jusqu'au fond du bol 20, en position de dégagement. La manivelle a été illustrée dans les deux positions à la figure 4.

La poignée comprend au moins un ressort 54 prenant appui d'une part sur le bâti 30 et d'autre part sur la manivelle 40 et assurant un maintien bistable du volet. Le ressort 54 est donc configuré de sorte qu'il confère de la stabilité au volet dans ses deux positions d'occupation et de dégagement. Cela signifie que lorsque le volet occupe la position d'occupation comme sur la figure 5, le ressort 54 tend à le ramener dans cette position si une sollicitation tendait à la lui faire quitter. De même, dans la position de la figure 6, si le volet est sollicité en direction de la position d'occupation, le ressort tend à lui faire conserver la position de dégagement.

La poignée comprend un moteur 56 fixé rigidement au bâti et agencé pour commander la rotation de la manivelle afin de faire passer le volet de la position d'occupation à la position de dégagement et inversement. La manivelle porte en l'espèce un secteur denté qui engrène avec un arbre cannelé du moteur afin que ce dernier puisse manoeuvrer la manivelle dans les deux sens de rotation. Le moteur est dimensionné pour vaincre la force de rappel du ressort bistable 54.

La poignée comprend un amortisseur 60 dont un boitier est rigidement fixé au bâti et une partie mobile est reliée à la manivelle. Il a pour fonction de lisser et de ralentir le mouvement du volet dans les deux sens. Il vise aussi à réduire le bruit généré par le mouvement des pièces. L'amortisseur assure une ouverture et une fermeture du volet en douceur.

Si une panne au sein du véhicule ou de la poignée empêche la manoeuvre du volet 14 au moyen du moteur 56, il demeure possible de faire passer le volet 14 manuellement de la position d'occupation à la position de dégagement. La poignée est en effet configurée pour autoriser un tel déplacement du volet sous l'effet d'une sollicitation en ce sens depuis l'extérieur de la poignée. On prévoit donc notamment que la liaison du moteur à la manivelle est réversible. Dans une telle hypothèse, l'utilisateur pousse manuellement le volet 14, ce dernier est maintenu en position de dégagement par le ressort 54 et l'utilisateur est en mesure de saisir la partie de préhension 12 pour ouvrir l'ouvrant ou pour accéder au verrou 28.

Pour éviter les fausses manipulations ou réduire les risques d'accident, par exemple lorsqu'une personne cherche à verrouiller le véhicule alors qu'une autre personne manoeuvre la partie de préhension 12, la poignée est agencée pour empêcher le retour du volet 14 en position d'occupation lorsque la partie de préhension est en position d'ouverture. Ainsi, la personne qui manipule la partie de préhension ne risque pas d'être pincée par le volet qui retourne en position d'occupation.

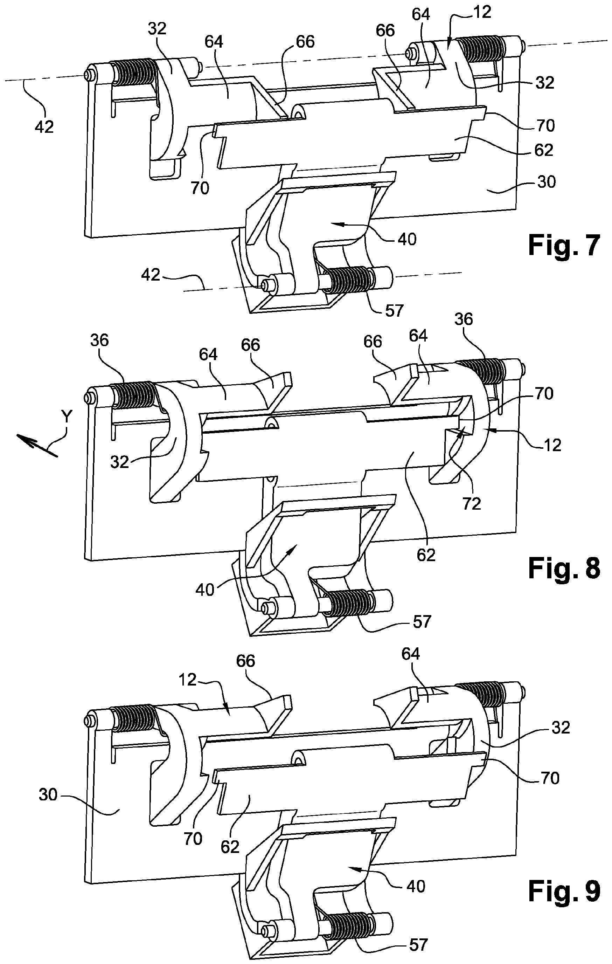

Le mécanisme prévu à cette fin est illustré notamment à la figure 7. A cet égard, la manivelle 40 comporte une platine 62 qui prolonge la manivelle de part et d'autre de celle-ci parallèlement à la direction de l'axe 34.

Chaque bras 32 de la partie de préhension 12 porte une extension 64 s'étendant en direction de l'autre bras et portant elle-même à son extrémité libre une entretoise 66 présentant une forme générale triangulaire visible notamment sur les figures 8 et 9 et s'étendant chacune dans un plan perpendiculaire à l'axe 42. La poignée est configurée de sorte que, lorsque le volet 14 est dans la position de dégagement, la platine 62 est en position reculée par rapport au bâti 30. La manoeuvre de la partie de préhension de la position de repos à la position d'ouverture place les entretoises 66 en regard de la face externe de la platine 62, dans la trajectoire de cette dernière, voire en butée contre celle-ci comme illustré à la figure 7. La manivelle 40 se trouve donc empêchée de pivoter pour redonner au volet 14 sa position d'occupation. Lorsque la partie de préhension reprend sa position de repos, les entretoises 66 libèrent la platine 62 et se placent hors de la trajectoire de cette dernière, rendant ainsi possible le retour du volet en position d'occupation.

Par ailleurs, la poignée présente un comportement avantageux lors d'un choc latéral en cas d'accident, illustré aux figures 8 et 9. Dans ce cas, la partie de préhension 12 et le volet 14 subissent des accélérations suivant la direction Y qui est la direction horizontale transversale à la direction de marche du véhicule, en direction de l'extérieur de ce dernier. En raison de cette accélération, la partie de préhension 12 tend à passer de la position de repos à la position d'ouverture, et le volet 14 est sollicité en étant maintenu dans la position d'occupation. La poignée est configurée de sorte que, dans un tel cas, le volet bloque tout mouvement de la partie de préhension à partir de sa position de repos.

A cette fin, la platine 62 porte des oreilles 70 sur ses deux extrémités supérieures latérales. Les cols de cygne 32 présentent sur leur face interne des cavités 72 formant des logements de réception respectifs pour les oreilles 70 lorsque la poignée est au repos. Ces logements sont configurés pour permettre la rotation préalable de la manivelle tant que la partie de préhension 12 demeure en position de repos. Les figures 8 et 9 illustrent ainsi les positions de la manivelle correspondant aux positions d'occupation et de dégagement du volet, la partie de préhension demeurant fixe. Les logements sont configurés de sorte que le col de cygne vient en butée contre l'oreille 70 correspondante et en interférence avec elle si on tente de faire tourner la partie de préhension pour la placer en position d'ouverture alors que le volet se trouve toujours en position d'occupation. Ainsi, lorsque la partie de préhension se trouve sollicitée vers l'extérieur à partir de sa position de repos sous l'effet d'une accélération brutale due à un choc latéral, tout mouvement de la partie de préhension est interdit par le volet en position d'occupation. En revanche, lors de l'utilisation de la poignée, le volet étant préalablement placé en position de dégagement comme sur la figure 9, la position des oreilles 70 hors des cavités 72 autorise le libre mouvement de la partie de préhension 12.

Bien entendu, on pourra apporter à l'invention de nombreuses modifications sans sortir du cadre de celle-ci.

On peut prévoir de se dispenser du moteur 56. C'est la situation qui a été illustrée aux figures 7 à 9. Un ressort supplémentaire 57 est alors prévu qui assure le rappel du volet en position d'occupation et prend appui sur ce dernier et sur le bâti 30. On se dispense aussi alors du ressort de maintien bistable 54.

## Revendications

1. Poignée (4) d'ouvrant (2) de véhicule, ledit ouvrant (2) comprenant un bâti et une paroi principale externe (6) présentant des faces externes (8, 10) planes et contiguës l'une à l'autre et à la poignée (4), ladite poignée comprenant :
- une partie de préhension (12) mobile en rotation entre une position de repos masquant une cavité (20) présente dans l'ouvrant (2) et s'étendant à une zone de jonction des faces (8, 10) et une position d'ouverture dans laquelle la partie de préhension (12) dégage en grande partie la cavité (20), s'étendant à distance des faces (8, 10) de l'ouvrant (2) au-dessus et en regard de ce dernier et un volet (14) monté mobile en translation par rapport au bâti entre :
- une position dans laquelle ledit volet (14) occupe une ouverture (22) s'étendant dans le prolongement de la partie de préhension (12) et ne permettant pas une manoeuvre de cette dernière ; et
- une position dans laquelle ledit volet (14) dégage l'ouverture (22).

2. Poignée (4) selon la revendication précédente dans laquelle le volet (14) est monté coulissant par rapport à un bâti (30) de la poignée.

3. Poignée (4) selon au moins l'une quelconque des revendications précédentes qui comprend un moteur (56) apte à faire passer le volet (14) de la position d'occupation à la position de dégagement.

4. Poignée (4) selon au moins l'une quelconque des revendications précédentes qui comprend un ralentisseur (60) d'un mouvement du volet (14).

5. Poignée (4) selon au moins l'une quelconque des revendications précédentes qui comprend des moyens (15) agencés pour commander le dégagement de l'ouverture (22) par le volet (14) sous l'effet d'une réception d'un signal par une liaison sans fil.

6. Poignée (4) selon au moins l'une quelconque des revendications précédentes, agencée pour permettre de déplacer le volet (14) manuellement pour le faire passer de la position d'occupation à la position de dégagement.

7. Poignée (4) selon au moins l'une quelconque des revendications précédentes qui comprend des moyens (54) d'immobilisation du volet (14) dans la position de dégagement, distincts de la partie de préhension.

8. Poignée (4) selon au moins l'une quelconque des revendications précédentes, dans laquelle, la partie de préhension (12) étant montée mobile entre une position de repos et une position d'ouverture, la poignée (4) est agencée de sorte que le volet (14) ne peut pas quitter la position de dégagement lorsque la partie de préhension (12) est en position d'ouverture.

9. Poignée (4) selon la revendication précédente, dans laquelle la partie de préhension (12) est agencée de sorte que, en position d'ouverture, elle empêche le volet (14) de quitter sa position de dégagement.

10. Poignée (4) selon au moins l'une quelconque des revendications précédentes dans laquelle, la partie de préhension (12) étant montée mobile entre une position de repos et une position d'ouverture, le volet (14) est agencé de sorte que, en position d'occupation, il empêche la poignée (4) de quitter sa position de repos sous l'effet d'une accélération orientée vers l'extérieur de l'ouvrant.

11. Poignée (4) selon au moins l'une quelconque des revendications précédentes qui comprend une source de lumière (26) pour éclairer l'ouverture (22).

12. Poignée (4) selon au moins l'une quelconque des revendications précédentes dans laquelle la partie de préhension (12) est montée mobile entre une position de repos dans laquelle elle masque un verrou (28) de la poignée (4) et une position d'ouverture dans laquelle elle découvre le verrou (28).

13. Ouvrant (2) de véhicule **caractérisé en ce qu'**il comprend une poignée (4) selon au moins l'une quelconque des revendications précédentes, la partie de préhension (12) et le volet (14) s'étendant au repos dans au moins un plan local d'une paroi principale externe (6) de l'ouvrant.

14. Ouvrant (2) selon la revendication précédente dans lequel la poignée est agencée de sorte que le volet (14) passe de la position d'occupation à la position de dégagement en s'enfonçant dans la cavité (20) ménagé dans la face externe de la paroi (6).

## Patentansprüche

1. Griff (4) einer Öffnung (2) eines Fahrzeugs, wobei die besagte Öffnung (2) ein Gestell und eine externe Hauptwand (6) umfasst, die ebene und zueinander und zum Griff (4) benachbarte externe Seiten (8, 10) aufweist, wobei der besagte Griff umfasst:
- einen beweglichen Greifabschnitt (12), der zwischen einer Ruheposition, die eine Vertiefung (20) verdeckt, die in der Öffnung (2) vorhanden ist, und sich in eine Verbindungszone der Seiten (8, 10) erstreckt, und einer Öffnungsposition drehbar ist, in der der Greifabschnitt (12) die Vertiefung (20) größtenteils freigibt, die sich auf Abstand zu den Seiten (8, 10) der Öffnung (2) oberhalb und gegenüber von diesem letzteren erstreckt,
und eine Klappe (14), die im Verhältnis zum Gestell verschiebbar montiert ist, zwischen:
- einer Position, in der die besagte Klappe (14) eine Öffnung (22) einnimmt, die sich in der Verlängerung des Greifabschnitts (12) erstreckt und eine Betätigung von letzterem nicht erlaubt; und
- einer Position, in der die besagte Klappe (14) die Öffnung (22) freigibt.

2. Griff (4) nach dem vorhergehenden Anspruch, wobei die Klappe (14) im Verhältnis zu einem Gestell (30) des Griffs gleitend montiert ist.

3. Griff (4) nach zumindest einem der vorhergehenden Ansprüche, der einen Motor (56) umfasst, der imstande ist, die Klappe (14) von der Einnahmeposition in die Freigabeposition übergehen zu lassen.

4. Griff (4) nach zumindest einem der vorhergehenden Ansprüche, der einen Verzögerer (60) für eine Bewegung der Klappe (14) umfasst.

5. Griff (4) nach zumindest einem der vorhergehenden Ansprüche, der Mittel (15) umfasst, die angeordnet sind, um die Freigabe der Öffnung (22) durch die Klappe (14) unter der Wirkung eines Empfangs eines Signals durch eine drahtlose Verbindung zu steuern.

6. Griff (4) nach zumindest einem der vorhergehenden Ansprüche, der angeordnet ist, um es zu ermöglichen, die Klappe (14) von Hand zu bewegen, um sie von der Einnahmeposition in die Freigabeposition übergehen zu lassen.

7. Griff (4) nach zumindest einem der vorhergehenden Ansprüche, der Mittel (54) zur Immobilisierung der Klappe (14) in der Freigabeposition umfasst, die sich vom Greifabschnitt unterscheiden.

8. Griff (4) nach zumindest einem der vorhergehenden Ansprüche, wobei der Griff (4), da der Greifabschnitt (12) beweglich zwischen einer Ruheposition und einer Öffnungsposition montiert ist, derart angeordnet ist, dass die Klappe (14) die Freigabeposition nicht verlassen kann, wenn der Greifabschnitt (12) in der Öffnungsposition ist.

9. Griff (4) nach dem vorhergehenden Anspruch, wobei der Greifabschnitt (12) derart angeordnet ist, dass er in der Öffnungsposition die Klappe (14) daran hindert, ihre Freigabeposition zu verlassen.

10. Griff (4) nach zumindest einem der vorhergehenden Ansprüche, wobei die Klappe (14), da der Greifabschnitt (12) beweglich zwischen einer Ruheposition und einer Öffnungsposition montiert ist, derart angeordnet ist, dass sie den Griff (4) in der Einnahmeposition daran hindert, seine Ruheposition unter der Wirkung einer Beschleunigung zu verlassen, die zur Außenseite der Öffnung gerichtet ist.

11. Griff (4) nach zumindest einem der vorhergehenden Ansprüche, der eine Lichtquelle (26) umfasst, um die Öffnung (22) zu beleuchten.

12. Griff (4) nach zumindest einem der vorhergehenden Ansprüche, wobei der Greifabschnitt (12) beweglich zwischen einer Ruheposition, in der er ein Schloss (28) des Griffs (4) verdeckt, und einer Öffnungsposition montiert ist, in der er das Schloss (28) freigibt.

13. Öffnung (2) eines Fahrzeugs, **dadurch gekennzeichnet, dass** sie einen Griff (4) nach zumindest einem der vorhergehenden Ansprüche umfasst, wobei sich der Greifabschnitt (12) und die Klappe (14) in der Ruhe über zumindest eine lokale Ebene einer externen Hauptwand (6) der Öffnung erstrecken.

14. Öffnung (2) nach dem vorhergehenden Abschnitt, wobei der Griff derart angeordnet ist, dass die Klappe (14) von der Einnahmeposition in die Freigabeposition übergeht, indem sie sich in die Vertiefung (20) versenkt, die an der Außenseite der Wand (6) vorhanden ist.

## Claims

1. A door leaf (2) handle (4) for a vehicle, said door leaf (2) comprising a frame and an outer main wall (6) having flat outer faces (8, 10) contiguous to each other and to the handle (4), said handle comprising:
- a gripping portion (12) movable in rotation between a rest position masking a cavity (20) present in the door leaf (2) and extending to a junction area of the faces (8, 10) and an opened position in which the gripping portion (12) largely disengages the cavity (20), extending at a distance from the faces (8, 10) of the door leaf (2), above and opposite the latter and a flap (14) mounted movable in translation relative to the frame between:
- a position in which said flap (14) occupies an opening (22) extending in the extension of the gripping portion (12) and not allowing a maneuver of the latter; and
- a position in which said flap (14) disengages the opening (22).

2. The handle (4) according to the preceding claim, wherein the flap (14) is slidably mounted relative to a frame (30) of the handle.

3. The handle (4) according to at least any one of the preceding claims, which comprises a motor (56) capable of switching the flap (14) from the occupied position to the disengaged position.

4. The handle (4) according to at least any one of the preceding claims, which comprises a retarder (60) of a movement of the flap (14).

5. The handle (4) according to at least any one of the preceding claims, which comprises means (15) arranged to control the disengagement of the opening (22) by the flap (14) under the effect of a reception of a signal by a wireless link.

6. The handle (4) according to at least any one of the preceding claims, arranged to allow moving the flap (14) manually in order to switch it from the occupied position to the disengaged position.

7. The handle (4) according to at least any one of the preceding claims, which comprises means (54) for immobilizing the flap (14) in the disengaged position, distinct from the gripping portion.

8. The handle (4) according to at least any one of the preceding claims, wherein the gripping portion (12) is movably mounted between a rest position and an opened position, the handle (4) is arranged such that the flap (14) cannot leave the disengaged position when the gripping portion (12) is in the opened position

9. The handle (4) according to the preceding claim, wherein the gripping portion (12) is arranged such that, in the opened position, it prevents the flap (14) from leaving its disengaged position.

10. The handle (4) according to at least any one of the preceding claims, wherein the gripping portion (12) is movably mounted between a rest position and an opened position, the flap (14) is arranged such that, in the occupied position, it prevents the handle (4) from leaving its rest position under the effect of an acceleration oriented towards the outside of the door leaf.

11. The handle (4) according to at least any one of the preceding claims, which comprises a light source (26) to illuminate the opening (22).

12. The handle (4) according to at least any one of the preceding claims, wherein the gripping portion (12) is movably mounted between a rest position in which it masks a lock (28) of the handle (4) and an opened position in which it uncovers the lock (28).

13. A vehicle door leaf (2), **characterized in that** it comprises a handle (4) according to at least any one of the preceding claims, the gripping portion (12) and the flap (14) extending at rest in at least one local plane of an outer main wall (6) of the door leaf.

14. The door leaf (2) according to the preceding claim, wherein the handle is arranged so that the flap (14) switches from the occupied position to the disengaged position by sinking into the cavity (20) formed in the outer face of the wall (6).
